# EUROPEAN PATENT APPLICATION

(11) **EP 2 570 985 A1**
(43) Date of publication of application: **20.03.2013**
(21) Application number: 12183116.8
(22) Date of filing: 05.09.2012
(51) Int. Cl.: G06Q 50/06

(54) **Systems and methods for startup of a power plant**

(30) Priority: 15.09.2011 US 201113233471
(71) Applicant: General Electric Company, Schenectady, NY 12345 (US)
(72) Inventor: O'Connor, Michael James, Simpsonville, SC South Carolina 29681 (US); Schroder, Mark Stewart, Greenville, SC South Carolina 29615 (US); Johnson, Scott Francis, Simpsonville, SC South Carolina 29681 (US); Holt, Joel Donnell, Scotia, NY New York 12302 (US)
(74) Representative: Cleary, Fidelma

(57) **Abstract**

Embodiments of the invention can provide systems and methods for startup of a power plant (130). According to one embodiment of the invention, a system can be provided. The system can include a computer processor (104). The system can also include a memory (102) operable to store computer-executable instructions operable to determine a current state of the power plant; determine an anticipated future state of the power plant; and determine a startup profile between the current state of the power plant (130) and the anticipated future state of the power plant (130) based on at least one parameter and a desired result.

## Description

### FIELD OF THE INVENTION

Embodiments of the invention relate generally to power plants, and more particularly to systems and methods for startup of a power plant.

### BACKGROUND OF THE INVENTION

Alternative power plant startup profiles have been developed to enable accelerated startups. Although alternative startup profiles provide more megawatts (MWs) to a power grid earlier in a startup, they also have the potential to consume a significantly higher amount of fuel compared to a conventional startup profile before the power plant is able to achieve full-load capability. As a result, the MWs generated through an accelerated startup profile may be relatively costly because the power plant has not yet diluted the variable cost of the power plant, i.e., dollars per megawatt hour ($/MWh).

### BRIEF DESCRIPTION OF THE INVENTION

Some or all of the above needs and/or problems may be addressed by certain embodiments of the invention. Disclosed a may include systems and methods for startup of a power plant. According to one aspect of the invention, there is disclosed a method for startup of a power plant. The method can include determining a current state of the power plant; determining an anticipated future state of the power plant; and determining a startup profile for the power plant, the startup profile may be initiated at any intermediate time and state between the current state of the power plant and the anticipated future state of the power plant based on at least one parameter and a desired result.

According to another aspect, the invention resides in a computer program comprising program code means arranged to perform the above method and in the computer program embodied on a computer-readable medium.

According to yet another aspect of the invention, there is disclosed a system for startup of a power plant. The system can include a computer processor. The system can also include a memory in communication with the computer processor and operable to store the above computer program.

Other embodiments, aspects, and features of the invention will become apparent to those skilled in the art from the following detailed description, the accompanying drawings, and the appended claims.

### BRIEF DESCRIPTION OF THE DRAWINGS

Embodiments of the present invention will now be described, by way of example only, with reference to the accompanying drawings in which:

Reference will now be made to the accompanying drawings, which are not necessarily drawn to scale, and wherein:
FIG. 1 is a schematic illustrating details of an example data flow including a block diagram of a computer environment for implementing a startup of a power plant, according to an embodiment of the invention.
FIG. 2 is a flow diagram illustrating details of an example method for implementing a startup of a power plant, according to an embodiment of the invention.
FIG. 3 is a graph illustrating the profitability of example accelerated startup profiles and conventional startup profiles, according to an embodiment of the invention.
FIG. 4 is a graph illustrating an example current state of a power plant and an example future anticipated state of the power plant, according to an embodiment of the invention.
FIG. 5 is a graph illustrating economic examples resulting from possible startup profile paths of a power plant from an example current state of the power plant to an example future anticipated state of the power plant, according to an embodiment of the invention.

### DETAILED DESCRIPTION OF THE INVENTION

Illustrative embodiments of the invention will now be described more fully hereinafter with reference to the accompanying drawings, in which some, but not all embodiments of the invention are shown. The invention may be embodied in many different forms and should not be construed as limited to the embodiments set forth herein; rather, these embodiments are provided so that this disclosure will satisfy applicable legal requirements. Like numbers refer to like elements throughout.

Illustrative embodiments of the invention are directed to, among other things, systems and methods for startup of a power plant. Certain illustrative embodiments of the invention may be directed to determining a startup profile of a power plant at an intermediate time and state between a current state of the power plant and an anticipated future state of the power plant based on at least one parameter and a desired result. The startup profile facilities a change or movement from one state of the power plant to another state of the power plant. In some embodiments, the current, intermediate, and/or future state of the power plant can be a partial or collective thermal state of the power plant.

In some embodiments, the at least one parameter may include anticipated or specified future market conditions and trends, such as power prices, fuel prices, emissions costs, and/or electrical grid load demand. In other embodiments, the at least one parameter may include turbomachinery speed, plant load, and/or plant generated emissions versus time profiles for the state of the power plant when the startup profile is initiated. In still other embodiments, the desired result may include a least costly startup profile, a shortest time or duration startup profile, a maximum profit startup profile, a maximum revenue startup profile, and/or a specific load at a future time startup profile.
Certain embodiments of the invention can include a database of known startup profiles. In other embodiments, an algorithm for generating the startup profile can be accessed.

Certain embodiments of the invention can provide a technical solution to facilitating startup of a power plant, and more particularly to facilitating optimal startup of a power plant. In one embodiment, a current state of the power plant can be determined. An anticipated future state of the power plant can also be determined. A startup profile can be determined based on the current state of the power plant, the anticipated future state of the power plant, at least one parameter, and a desired result. In this manner, certain embodiments of the invention can facilitate optimal startup of a power plant by determining an optimal startup profile at a specific time to provide a least costly startup profile, a shortest time or duration startup profile, a maximum profit startup profile, a maximum revenue startup profile, and/or a specific load at a future time startup profile.

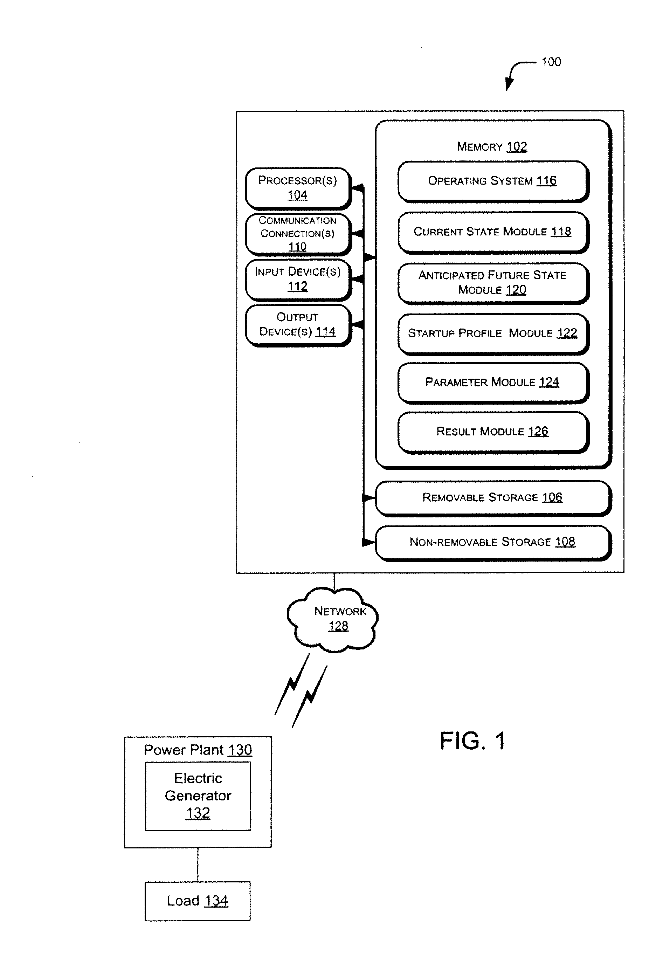

FIG. 1 provides an illustrative overview of a system, including one computing device 100, according to an embodiment of the invention. The computing device 100 may be configured as any suitable computing device capable of implementing the disclosed features, and accompanying methods, such as, but not limited to, those described with reference to FIG. 1. By way of example and not limitation, suitable computing devices may include personal computers (PCs), servers, server farms, data centers, or any other device capable of storing and executing all or part of the disclosed features.

In one illustrative configuration, the computing device 100 comprises at least a memory 102 and one or more processing units (or processor(s)) 104. The processor(s) 104 may be implemented as appropriate in hardware, software, firmware, or combinations thereof. Software or firmware implementations of the processor(s) 104 may include computer-executable or machine-executable instructions written in any suitable programming language to perform the various functions described.

Memory 102 may store program instructions that are loadable and executable on the processor(s) 104, as well as data generated during the execution of these programs. Depending on the configuration and type of computing device 100, memory 102 may be volatile (such as random access memory (RAM)) and/or non-volatile (such as read-only memory (ROM), flash memory, etc.). The computing device or server may also include additional removable storage 106 and/or non-removable storage 108 including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 102 may include multiple different types of memory, such as static random access memory (SRAM), dynamic random access memory (DRAM), or ROM.

Memory 102, removable storage 106, and non-removable storage 108 are all examples of computer-readable storage media. For example, computer-readable storage media may include volatile and non-volatile, removable and non-removable media implemented in any method or technology for storage of information such as computer-readable instructions, data structures, program modules or other data. Memory 102, removable storage 106, and non-removable storage 108 are all examples of computer storage media. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tape, magnetic disk storage or other magnetic storage devices, or any other medium which can be used to store the desired information and which can be accessed by the server or other computing device. Combinations of any of above should also be included within the scope of computer-readable media.

Alternatively, computer-readable communication media may include computer-readable instructions, program modules, or other data transmitted within a data signal, such as a carrier wave, or other transmission.

The computing device 100 may also contain communication connection(s) 110 that allow the computing device 100 to communicate with a stored database, another computing device or server, user terminals, and/or other devices on a network 128. The computing device 100 may also include input device(s) 112 such as a keyboard, mouse, pen, voice input device, touch input device, etc., and output device(s) 114, such as a display, speakers, printer, etc.

Turning to the contents of the memory 102 in more detail, the memory 102 may include an operating system 116 and one or more application programs or services for implementing the features disclosed herein including a current state module 118. The current state module 118 may be configured to determine a current state of the power plant 130. Additionally, the current state module 118 may also store the current state of the power plant 130 in the memory 102. An example current state of the power plant can be a current collective state of the components of the power plant. For example, the current state of the power plant can include the collective current state of a turbine, pump, heat exchanger, and/or other component(s) of the power plant. A current state of the power plant can be determined by analyzing data from a variety of sensors and/or monitors that collect or otherwise receive operating and/or performance data regarding individual and/or groups of components of the power plant. For example, in some embodiments, the data collected or otherwise received from the variety of sensors and/or monitors can include, but is not limited to, one or more: temperatures of various fluids and metals of the power plant; pressures of various fluids and equipment contained within systems and sub-systems of the power plant; flow rates of various fluids within the power plant systems and sub-systems; and/or control system settings (e.g., controlling parameters for valves, pumps, fans, etc.) that keep the power plant operating at a current condition. The data received by each sensor and/or monitor may be collectively summed to determine a current state of the power plant.

The memory 102 may further include an anticipated state module 120. The anticipated state module 120 may be configured to determine an anticipated state of the power plant 130. Additionally, the anticipated state module 120 may also store the anticipated state of the power plant 130 in the memory 102. An example anticipated state of the power plant can be a state that is greater or lesser than the current state of the power plant. For example, the anticipated state of the power plant may be greater that the current state of the power plant due to an anticipated increase is load demand. The anticipated state of the power plant can be determined by referencing historical load requirements on a specific day at a specific time, referencing weather forecasts which may increase or decrease future load demand, and/or taking into consideration any future event which may increase or decrease future load demand. The anticipated state of the power plant can be forecasted by any means or type of modeling and/or predicting. It can also be a desired future state, or any future state between a desired state and/or a forecasted state.

The memory 102 may also include a startup profile module 122. The startup profile module 122 may be configured to determine a startup profile of the power plant 130 to be initiated at an intermediate time and state between the current state of the power plant, as determined in current state module 118, and the anticipated future state of the power plant, as determined in anticipated state module 120, based on at least one parameter, as determined in parameter module 124 described below, and a desired result, as determined in result module 126 described below. Examples of start up profiles can be an accelerated startup profile or a previously stored startup profile, i.e., depending on the desired result, a conventional startup profile or an accelerated startup profile or a previously stored startup profile may be implemented. For example, if the desired result is a least costly startup profile, and the at least one parameter is anticipated or specified future market conditions, the respective revenue and expense streams for numerous startup profiles can be established and the net-profitability of each startup profile can be compared to determine the least costly startup profile for the given anticipated or specified future market conditions.

The memory 102 may also include a parameter module 124. The parameter module 124 may be configured to provide at least one parameter for determining the startup profile in startup profile module 122. Suitable parameters can include, but are not limited to, anticipated or specified future market conditions and trends, such as power prices, fuel prices, emissions costs, electrical grid load demand, turbomachinery speed, plant load, and/or plant generated emissions versus time profiles for the state of the power plant when the startup profile is initiated. In other embodiments, suitable parameters can be any parameter that may affect the desired result of the startup profile. For example, if the desired result for the startup profile is a least costly startup profile, then the at least one parameters can include cost indicators, such as power prices, fuel prices, and/or emissions costs.

The memory 102 may also include a result module 124. The result module may by configured to provide at least one desired result for determining the startup profile in startup profile module 122. A suitable desired result may include, but is not limited to, a least costly startup profile, a shortest time or duration startup profile, a maximum profit startup profile, a maximum revenue startup profile, and/or a specific load at a future time startup profile. In other embodiments, suitable desired results can be any result related to cost, time, and/or load.

Various instructions, methods and techniques described herein may be considered in the general context of computer-executable instructions, such as program modules, executed by one or more computers or other devices. Generally, program modules include routines, programs, objects, components, data structures, etc., for performing particular tasks or implementing particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on some form of computer-readable storage media.

The example computing device 100 shown in FIG. 1 is provided by way of example only. Numerous other operating environments, system architectures, and device configurations are possible. Accordingly, embodiments of the present disclosure should not be construed as being limited to any particular operating environment, system architecture, or device configuration.

Still referring to FIG. 1, by way of example, the computing device 100 can be in communication with a power plant 130 via a network 128. The power plant 130 may include an electric generator 132 or other means or devices for generating power. The power plant 130 generates power to meet, satisfy, or otherwise supply a load 134. Certain illustrative embodiments of the invention may be directed towards the computing device 100 determining a startup profile 122 of the power plant 130 at an intermediate time and state between a current state 118 of the power plant 130 and an anticipated future state 120 of the power plant 130 based on at least one parameter 124 and a desired result 126.

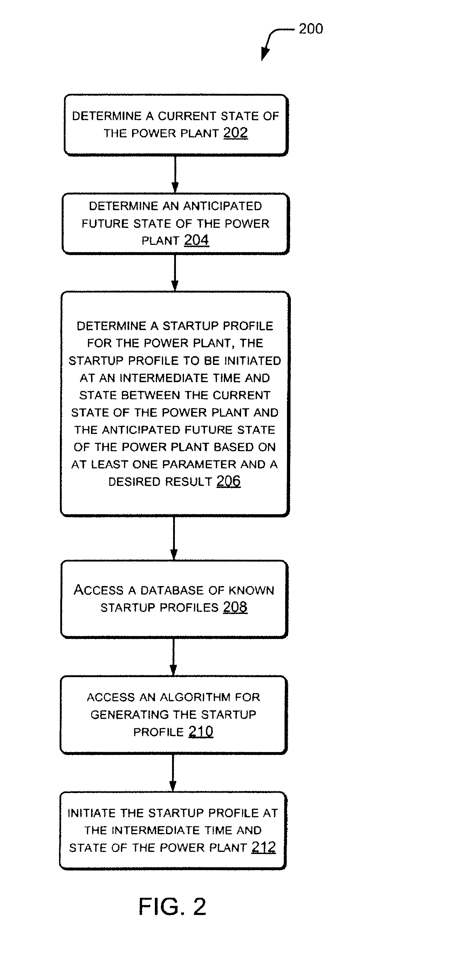

FIG. 2 illustrates an example flow diagram of a method 200 for startup of a power plant, in accordance with an embodiment of the invention. In one example, the illustrative computing device 100 of FIG. 1 and/or one or more modules of the illustrative computing device 100, alone or in combination, may perform the described operations of method 200.

In this particular implementation, the method 200 may begin at block 202 of FIG. 2 in which the method 200 may include determining a current state of a power plant. Further, at block 204, the method 200 may include determining an anticipated future state of the power plant. At block 206, the method 200 may include determining a startup profile between the current state of the electric generator and the anticipated future state of the electric generator based on at least one parameter and a desired result. At block 210, a database of known startup profiles may be accessed to determine the startup profile. Moreover, at block 212, an algorithm for generating the startup profiles may be accessed. Once the start up profile is determined, at block 212, the startup profile is initiated at the intermediate time and state of the power plant.

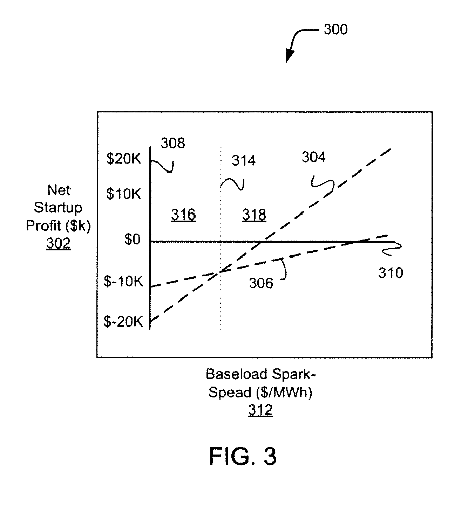

In certain embodiments previously described, the desired result can be a least costly startup profile. FIG. 3 is a graph 300 illustrating the profitability 302 of an accelerated startup profile 304 against a conventional startup profile 306. The y-axis 308 of the graph 300 indicates net startup profit 302. The x-axis 310 is dollars per megawatt hour 312. In certain embodiments, the slope of the accelerated startup profile 304 is relatively steeper than the slope of the conventional startup profile 306. Accordingly, at the initiation of the accelerated startup profile 304, profitability 302 may be relatively lower than the conventional startup profile 306. However, over time, the profitability 302 of the accelerated startup profile 304 increases and may surpass, as shown in FIG. 3, the profitability 302 of the conventional startup profile 306. Accordingly, if the time frame for a startup is to the left 316 of the reference line 314, than a conventional startup profile 306 is relatively more profitable than the accelerated startup profile 304. Conversely, if the time frame for a startup is to the right 318 of the reference line 314, than the accelerated startup profile 304 is relatively more profitable than the conventional startup profile 306. In certain embodiment, suitable parameters can include, but are not limited to, anticipated or specified future market conditions and trends, such as power prices, fuel prices, emissions costs. Depending on the anticipated or specified future market conditions and trends, the graph 300 may be adjusted accordingly.

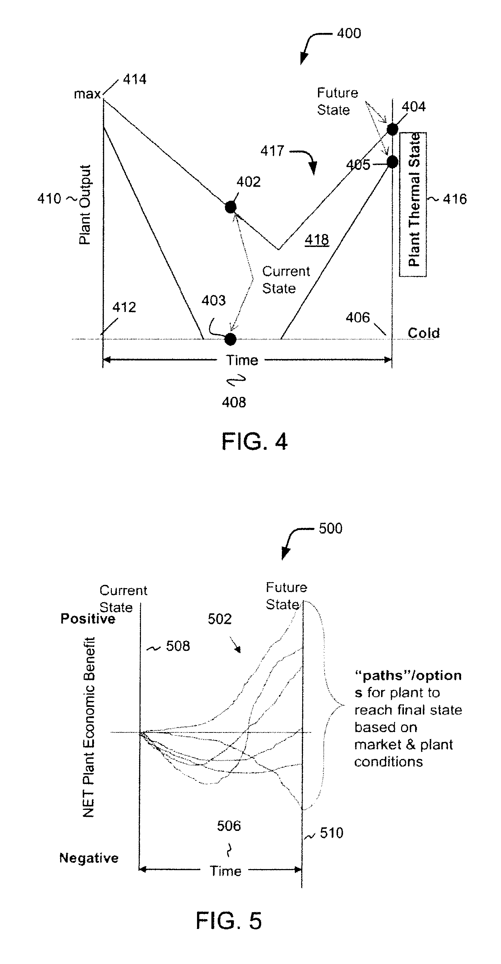

In certain embodiments previously described, one or more startup profiles may be implemented to reach an anticipated future state of a power plant. FIG. 4 is a graph 400 illustrating an example startup profile for a power plant in a current state 402 producing a current power plant output 403, which can vary from zero to maximum plant capability. The horizontal axis 408 is time. The left vertical axis 410 is the range of the power plant output from no output 412 to maximum output 414. The right vertical axis is the state 416 of the power plant from cold 406 to near maximum state 404. Increases and decreases in the output 410 of the power plant may correspond with increases and decreases in the state 416 of the power plant. The graph 400 illustrates a startup profile 417 that can be initiated at an intermediate time and state 418 between a current state 402 of the power plant and an anticipated future state 404 of the power plant to reach an anticipated future output 405 of the power plant. Numerous other startup profiles may be implemented to reach the anticipated future state 404 of the power plant and the anticipated future output 405 of the power plant.

FIG. 5 is a graph 500 for illustrating the numerous example startup profiles 502 that may be implemented to reach a future state 510 of the power plant. The horizontal axis 506 is time. The left vertical axis 508 is a measure of economic value or benefit for/to the power plant at the current state or prior to initiation of a start sequence. Item 510 depicts the representative time at which the future state is declared (or becomes the desired state). At the time indicated by 510, the axis identified in 508 can be used to assess the level of potential economic benefit. One or more of the example startup profiles 502 may take into consideration anticipated or specified future market conditions and trends, such as power prices, fuel prices, emissions costs, and/or electrical grid load demand, or turbomachinery speed, plant load, and/or plant generated emissions versus time profiles for the state of the power plant when the startup profile is initiated. Using that data, the respective revenue and expense streams for each of the example startup profiles 502 may be integrated and the net-profitability cross-compared in the graph 500 to determine a least costly startup profile, a shortest time or duration startup profile, a maximum profit startup profile, a maximum revenue startup profile, and/or a specific load at a future time startup profile. After generating the numerous example startup profiles, a user, such as an operator of the power plant, may choose a selected startup profile that best or otherwise suitably achieves a desired result.

Illustrative systems and methods are described for startup of a power plant. Some or all of these systems and methods may, but need not, be implemented at least partially by architectures such as those shown in FIG. 1 above.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

## Claims

1. A method (200) for startup of a power plant (130), comprising:
determining (200) a current state of the power plant (130);
determining an anticipated future state of the power plant (130); and
determining a startup profile (206) for the power plant, wherein the startup profile is initiated at any intermediate time and state between the current state of the power plant (130) and the anticipated future state of the power plant (130) based on at least one parameter and a desired result.

2. The method of Claim 1, wherein the at least one parameter includes anticipated or specified future market conditions and trends.

3. The method of Claim 2, wherein the anticipated future market conditions and trends comprise at least one of power prices, fuel prices, emissions costs, or electrical grid load demand.

4. The method of any of Claims 1 to 3, wherein the at least one parameter comprises at least one parameter of turbomachinery speed, plant load (134), or plant generated emissions versus time profiles for the state of the power plant (130) when the startup profile is initiated.

5. The method of any of Claims 1 to 4, wherein the desired result comprises at least one of a least costly startup profile, a shortest time or duration startup profile, a maximum profit startup profile, a maximum revenue startup profile, or a specific load at a future time startup profile.

6. The method of any of Claims 1 to 5, further comprising:
accessing (208) a database of known startup profiles.

7. The method of any of Claims 1 to 6, further comprising:
accessing (210) an algorithm for generating the startup profile.

8. The method of any of Claims 1 to 7, further comprising:
initiating the startup profile at the intermediate time and state of the power plant (130).

9. A computer program comprising computer program code means arranged to perform the method of any of Claims 1 to 8 when executed by a computer.

10. The computer program of Claim 9, embodied in a computer-readable medium.

11. A system for startup of a power plant (130), comprising:
a computer processor (104); and
a memory (102) in communication with the computer processor (104) arranged operable to store the computer program of claim 9 or 10.

12. The system of Claim 11, further comprising:
a database comprising one or more predefmed startup profiles.
